# EUROPÄISCHE PATENTSCHRIFT

(11) **EP 1 308 004 B1**
(45) Veröffentlichungstag und Bekanntmachung des Hinweises auf die Patenterteilung: **18.10.2006**
(21) Anmeldenummer: 01951394.4
(22) Anmeldetag: 16.06.2001
(51) Int. Cl.: H04L 12/10, H04L 12/40, G06F 1/32, B60R 16/02, G06K 9/52

(54) **VERFAHREN, GERÄT UND BUSMANAGER ZUM BETRIEB VON EINEM AN EIN FAHRZEUGKOMMUNIKATIONSNETZ ANGESCHLOSSENEN GERÄTS**
METHOD, DEVICE AND BUS MANAGER FOR OPERATING A DEVICE THAT IS CONNECTED TO A MOTOR VEHICLE COMMUNICATIONS NETWORK
PROCEDE, APPAREIL ET GESTIONNAIRE DE BUS POUR LE FONCTIONNEMENT D'UN APPAREIL RACCORDE A UN RESEAU DE COMMUNICATION AUTOMOBILE

(30) Priorität: 30.06.2000 DE 10031891
(43) Veröffentlichungstag der Anmeldung: 07.05.2003
(73) Patentinhaber: ROBERT BOSCH GMBH, 70442 Stuttgart (DE)
(72) Erfinder: VOLLMER, Vasco, 31188 Holle (DE); HOFMANN, Matthias, 31141 Hildesheim (DE); BAIERL, Wolfgang, 73630 Remshalden (DE)
(86) Internationale Anmeldenummer: PCT/DE2001/002241
(87) Internationale Veröffentlichungsnummer: WO 2002/003618

(56) Entgegenhaltungen:
- EP-A- 0 444 997
- EP-A- 0 798 626
- EP-A- 0 863 639
- EP-A- 0 870 648
- DE-A- 4 226 704
- DE-A- 19 853 451

## Beschreibung

### Stand der Technik

Die Erfindung geht aus von einem Verfahren zum Betrieb von einem an ein Fahrzeugkommunikationsnetz angeschlossenen Gerät nach der Gattung des unabhängigen Patentanspruchs.

Es ist bereits das IEEE1394 Bussystem bekannt, das seriell und selbstkonfigurierend ist und das derzeit für den Betrieb als ein Fahrzeugkommunikationsnetz erweitert wird. In IEEE1394a sind bereits Stromsparmodi offenbart, wobei ein Gerät, das an ein solches serielles Bussystem angeschlossen ist, vier verschiedene Aktivitätszustände aufweist, die von voller Aktivität bis zur vollständigen Abschaltung reichen. Ist ein Gerät vollständig abgeschaltet, muss es dennoch eine Grundfunktionalität auf der Ebene der Bitübertragungsschicht (physical layer) aufweisen, um insbesondere den Aufweckbefehl auswerten zu können.

EP 444 997 A zeigt eine Vorrichtung, welche eine Zentraleinheit und elektronische Module aufweist. Diese Module sind über eine Spannungsversorgungsleitung mit einer Batterie und über einen Datenbus untereinander und mit der zentralen Einheit verbunden. Im Falle der Inaktivität des gesamten Systems öffnet die zentrale Einheit einen Schalter und die Spannungsversorgung zu den Modulen ist unterbrochen. Dabei bleibt ein weiterer Schalter geschlossen, so dass einige Elemente der Module weiterhin über den Datenbus mit Strom aus der Batterie auch im Stadium der Inaktivität versorgt werden. In einem Aufwachzustand, wenn ein dritter Schalter geschlossen wird, erzeugen diese Elemente Aufwecksignale, die zu der zentralen Einheit über den Datenbus übertragen werden. Die zentrale Einheit schließt dann den ersten Schalter und versorgt die Module mit Spannung.

Die EP 870 648 A zeigt ein Bussystem in einem Kraftfahrzeug, bei welchem die Spannungsversorgung zu den einzelnen Busteilnehmern in einem Ruhezustand abgeschaltet wird. Erkennt der Busteilnehmer, dass er für einen notwendigen Datenaustausch ausgewählt wurde, schließt er einen die Stromversorgung wiederherstellenden Schalter.

### Vorteile der Erfindung

Das erfindungsgemäße Verfahren nach Anspruch 1, das Gerät nach Anspruch 7 und der Busmanager nach Anspruch 8 zum Betrieb von einem an ein Fahrzeugkommunikationsnetz angeschlossenem Gerät mit den Merkmalen der unabhängigen Patentansprüche hat dem gegenüber den Vorteil, dass ein effizienteres Energiemanagement erreicht wird, da die Funktionalität der Bitübertragungsschicht weitgehend abgeschaltet wird, bis auf die notwendige Mittel zur Auswertung des Frequenzimpulses, der das abgeschaltete Gerät wieder aufweckt.

Daneben ist es von Vorteil, dass der Frequenzimpuls über die Stromversorgungsleitung übertragen wird, da damit der Aktivierungsruf für das abgeschaltete Gerät einen Datenbus nicht belastet und die Mittel zur Auswertung des Frequenzimpulses direkt an der Stromversorgungsleitung angebracht werden können, was sich als äußerst günstig erweist.

Darüber hinaus ist es von Vorteil, dass mittels des erfindungsgemäßen Verfahrens zwischen einem ausgeschalteten Zustand, einem Zustand von Basisfunktionalität, der durch das Aktivieren mittels des Frequenzimpulses erreicht wird, und einem Zustand von voller Funktionalität, der beispielsweise durch einen weiteren Befehl durch den Busmanager erlangt wird, unterschieden werden kann. Durch diese Unterscheidung ist vorteilhafterweise eine höhere Energieeinsparung möglich, weil das abgeschaltete Gerät die Funktionalität zur Auswertung von Befehlen außer dem Frequenzimpuls abgeschaltet hat. Durch den Frequenzimpuls gelangt das Gerät in einen Zustand einen Aufweckbefehl, vorzugsweise über den Datenbus, zu empfangen und auszuwerten.

Durch die in den abhängigen Ansprüchen aufgeführten Maßnahmen und Weiterbildungen sind vorteilhafte Verbesserungen des im unabhängigen Patentanspruch angegebenen Verfahrens zum Betrieb von einem an ein Fahrzeugkommunikationsnetz angeschlossenen Gerät möglich.

Besonders vorteilhaft ist, dass der Frequenzimpuls durch eine einfache Auswerteschaltung, bestehend aus einem frequenzselektiven Filter zur Frequenzselektion und einem Schwellwertdetektor zur Leistungsselektion realisiert wird, die dazu führt, dass falsche Signale keinen Einfluss nehmen.

Darüber hinaus ist es von Vorteil, dass durch den Frequenzimpuls ein selektives Abschalten der Geräte erreicht wird, wenn die Frequenz des Frequenzimpulses für einzelne Geräte oder Gerätegruppen unterschiedlich ist, so dass den Frequenzimpuls nur die zu aktivierenden oder abzuschaltenden Geräte auswerten können.

Alternativ ist es von Vorteil, dass, wenn kein frequenzselektives Abschalten oder Reaktivieren des Geräts möglich ist, ein ganzer Zweig des Fahrzeugkommunikationsnetzes abgeschaltet wird, wobei dann das Gerät, das abzuschalten ist, veranlasst, dass auch alle diesem Gerät nachgeordnete Geräte abgeschaltet werden. Dies ist eine besonders einfache Methode, eine Abschaltung vorzunehmen.

Weiterhin ist es von Vorteil, dass das Abschalten bzw. Reaktivieren durch den Busmanager vorgenommen wird, so dass diese Funktion zentral ausgeführt wird. Dies führt zu einer Vereinfachung des erfindungsgemäßen Verfahrens.

Daneben ist es auch von Vorteil, dass sich ein Gerät selbst abschaltet, wenn es feststellt, dass es für eine vorgegebene Zeit keine Datenkommunikation mehr betrieben hat. Damit wird vorteilhafter Weise der Busmanager von solch einer Überwachung entlastet.

### Zeichnung

Ausführungsbeispiele der Erfindung sind in der Zeichnung dargestellt und werden in der nachfolgenden Beschreibung näher erläutert. Es zeigt Figur 1 die Topologie eines verzweigten Netzes, Figur 2 ein Bussystem, Figur 3 eine Auswerteschaltung und Figur 4 das Verfahren als Flussdiagramm.

### Beschreibung

Der Einsatz von Fahrzeugkommunikationsnetzen hält aufgrund der gestiegenen Zahl von Multimediafunktionen (Autoradio, Navigation, Auto-PC, Internetzugang über das Auto) immer mehr Einzug in das Kraftfahrzeug. Werden verschiedene Geräte an des Fahrzeugkommunikationsnetz angeschlossen, wobei einige Geräte zu bestimmten Zeitpunkten nicht verwendet werden, ist der Einsatz eines intelligenten Energiemanagements notwendig, um den Leistungsverbrauch der Geräte zu optimieren.

Erfindungsgemäß wird daher ein Verfahren zum Betrieb von einem an ein Fahrzeugkommunikationsnetz angeschlossenen Gerät implementiert, dass, wenn das Gerät einmal abgeschaltet wurde, durch einen Frequenzimpuls von einem Busmanager über eine Stromversorgungsleitung wieder reaktiviert wird. Durch eine einfache Auswerteschaltung, die an die Stromsversorgungsleitung angeschlossen wird, ist eine Auswertung möglich, wobei nur diese Auswerteschaltung während des ausgeschaltetenden Zustandes des Geräts betrieben werden muss, also mit Energie versorgt wird. Damit werden die Funktionalitäten der Bitübertragungsschicht, die die Datenübertragung als Funktionalität beinhalt, abschaltbar. Die Auswerteschaltung wird durch ein frequenzselektives Filter und einen nachgeschalteten Schwellwertdetektor realisiert. Die Abschaltung kann alternativ entweder durch den Busmanager erfolgen, erneut unter Verwendung eines Frequenzimpulses, der über die Stromsversorgungsleitung geschickt wird, oder durch das Gerät selbst. Diese Abschaltung erfolgt dann, wenn für eine vorgegebene Zeit von dem Gerät kein Datenverkehr über das Fahrzeugkommunikationsnetz übertragen beziehungsweise empfangen wurde. Wird die Frequenz des Frequenzimpulses variiert und einem jeweiligen Gerät oder Gerätegruppen eine solche, mit dem frequenzselektiven Filter unterscheidbare Frequenz zugeordnet, dann ist ein frequenzselektives Abschalten bzw. Reaktivieren von Geräten möglich. Alternativ ist es möglich, durch das Abschalten eines Geräts das Abschalten der diesem Gerät danach geordneten Geräte in einem Zweig zu veranlassen.

Als frequenzselektives Filter wird hier ein Bandpass eingesetzt. Es ist jedoch auch möglich, die frequenzselektive Filterung digital zu realisieren. Dabei wird dann beispielsweise ein digitaler Signalprozessor eingesetzt.

Bei Kommunikationsmodellen wie beispielsweise dem bekannten OSI-Modell werden die Funktionen in sogenannte Schichten aufgeteilt. Die unterste Schicht übernimmt Funktionen wie Modulation, Filterung und Verstärkung, also hardwarebezogene Funktionen. Diese Schicht wird hier wie beim OSI-Modell als Bitübertragungsschicht bezeichnet. Die Schichten darüber übernommen softwarebezogene Funktionen wie die Formatierung der zu übertragenden Daten. Die oberste Schicht ist meist eine Applikationsschicht, die also die Funktionen für einen Benutzer bereitstellt, beispielsweise die bedienbaren Funktionen eines CD-Spielers.

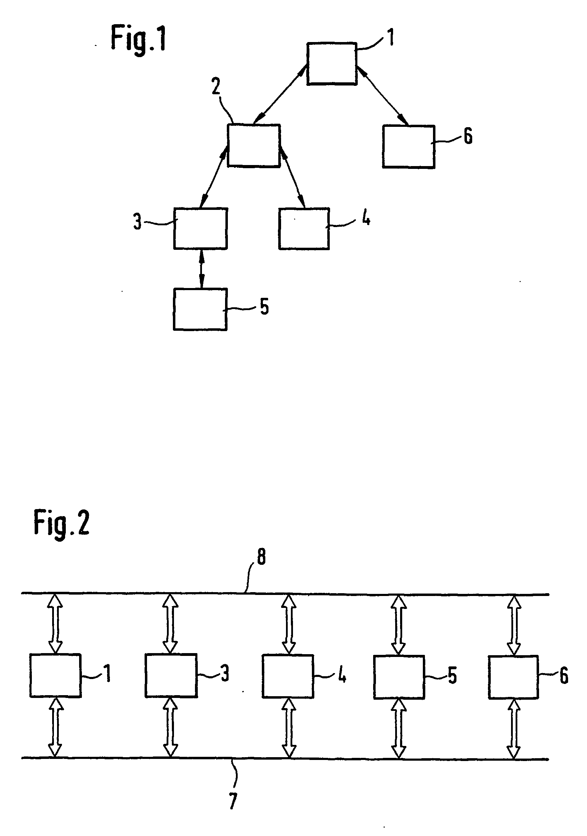

In Figur 1 ist die Topologie eines verzweigten Netzes dargestellt. Ein Busmanager 1 ist über einen ersten Datenein-/-ausgang mit einem Relaisknoten 2 verbunden. Über einen zweiten Datenein-/-ausgang ist der Busmanager 1 mit einem Mobiltelefon 6 verbunden. Der Busmanager 1 ist in dieser Netztopologie die Wurzel, da der Busmanager 1 der oberste Knoten das Grafen ist. An einem zweiten Datenein-/-ausgang des Relaisknoten 2 ist ein CD-Spieler 3 angeschlossen. An einen dritten Datenein-/-ausgang des Relaisknoten 2 ist ein Autoradio 4 angeschlossen. Über seinen zweiten Datenein-/-ausgang ist der CD-Spieler 3 mit einem CD-Wechsler 5 verbunden. Alternativ ist es möglich, dass diese Netztopologie um weitere Geräte ergänzt wird. Es ist auch möglich, dass das Fahrzeugkommunikationsnetz wie hier dargestellt mit weniger Geräten aufgebaut wird. Weiterhin ist es möglich, dass eine komplexere Verzweigung mit mehreren Relaisknoten vorliegt, wobei die einzelnen Relaisknoten auch Funktionalitäten aufweisen können. Der Relaisknoten 2 ist hier ein Lautsprechersystem mit Audioverstärker. Die Stromversorgungsleitung läuft parallel zu den Datenein-/-ausgängen zwischen den einzelnen Geräten. Die Datenleitungen sind hier elektrische Leitungen, es sind jedoch alternativ auch optische Leitungen möglich. In diesem Fall weisen die angeschlossenen Geräte Mittel auf, um optische Signale zu empfangen und zu versenden, beispielsweise Optokoppler.

Schaltet der Busmanager 1 den CD-Spieler 3 mittels eines Frequenzimpulses ab, den nur die Auswerteschaltung, die der Cd-Spieler 3 aufweist, auswerten kann, dann schaltet der CD-Spieler 3 seine Funktionalität bis auf die Auswerteschaltung selbst ab. Durch einen weiteren Frequenzimpuls kann der Busmanager 1 den CD-Spieler 3 wieder aktivieren. In der gleichen Weise kann der Busmanager 1 alle anderen Geräte frequenzselektiv An- und Abschalten. Daneben ist es möglich, dass der Busmanager 1 auch ganze Gruppen von Geräten abschaltet, wenn diese Gruppen von Geräten einen solchen Frequenzimpuls in gleicher Weise auswerten können. Alternativ ist es möglich, dass der Busmanager 1 den Relaisknoten 2 abschaltet und damit auch die nachfolgenden Geräte den CD-Spieler 3, das Autoradio 4 und den CD-Wechsler 5. Die Abschaltung übernimmt der Busmanager 1, wenn für eine vorgegebene Zeit keine Datenkommunikation von dem betreffenden Gerät über das Fahrzeugkommunikationsnetz übertragen wurde. Diese vorgegebene Zeit kann beispielsweise eine Minute betragen. Weiterhin ist es möglich, dass die Abschaltung durch den Relaisknoten 2 erfolgt, um alternativ den CD-Spieler 3 mit dem CD-Wechsler 5 oder das Autoradio 4 abzuschalten. Weiterhin ist es möglich, dass sich die einzelnen Geräte nach der vorgegebenen Zeit selbst abschalten und so eine übergeordnete Instanz wie den Busmanager 1 von dieser Überwachung entlasten. Dann wird der Frequenzimpuls, der über die Stromversorgungsleitung geleitet wird, nur zum wiederaufwecken verwendet. Weiterhin ist es möglich, dass der Abschaltbefehl über die Datenleitungen von dem Busmanager 1 an die einzelnen Geräte gesendet wird, weil hier die Geräte selbst noch nicht abgeschaltet sind.

Das Einschalten oder Aufwecken ist allerdings nur mit dem Frequenzimpuls möglich, weil die abgeschalteten Geräte die Mittel zur Auswertung von Daten, die über Datenleitungen versendet werden, abschalten.

In Figur 2 ist ein Bussystem dargestellt, bei dem die Geräte parallel miteinander über einen Datenbus 7 vernetzt sind. Neben einem Datenbus 7 sind die Geräte auch über eine Stromversorgungsleitung 8 miteinander verbunden. An den Datenbus 7 und die Stromversorgungsleitung 8 sind jeweils der Busmanager 1, der CD-Spieler 3, das Autoradio 4 und der CD-Wechsler 5 angeschlossen. Dabei werden jeweils Datenein-/-ausgänge für die Kommunikation über den Datenbus 7 verwendet, wobei die einzelnen Geräte Buskontroller aufweisen, um die Datenkommunikation über den Datenbus 7 zu bewerkstelligen, und einen Eingang von der Stromversorgungsleitung 8 haben, um einerseits Energie aufzunehmen und andererseits um den Frequenzimpuls gegebenenfalls zu empfangen und auszuwerten.

Der Busmanager 1 hat darüber hinaus noch einen Ausgang zur Stromversorgungsleitung 8, um den Frequenzimpuls auf die Stromversorgungsleitung 8 zu geben. Sollen andere Geräte auch die Frequenzimpuls senden können, dann müssen auch diese Geräte einen Ausgang zur Stromversorgungsleitung 8 aufweisen.

Bei diesem Bussystem ist es entweder möglich, dass durch einen Frequenzimpuls, der von dem Busmanager 1 ausgesendet wird, alle Geräte ausgeschaltet werden, wenn die Auswerteschaltungen der Geräte 3, 4, 5 und 6 alle auf die gleiche Frequenz abgestimmt sind oder dass jedes Gerät seine eigene Frequenz für den Frequenzimpuls aufweist, so dass eine individuelle Abschaltung oder Reaktivierung möglich ist oder dass die Geräte zu Gruppen zusammengefasst werden und diese Gruppen jeweils einem Frequenzimpuls bei einer bestimmten Frequenz zugeordnet werden, um diese Gruppe auszuschalten oder reaktivieren.

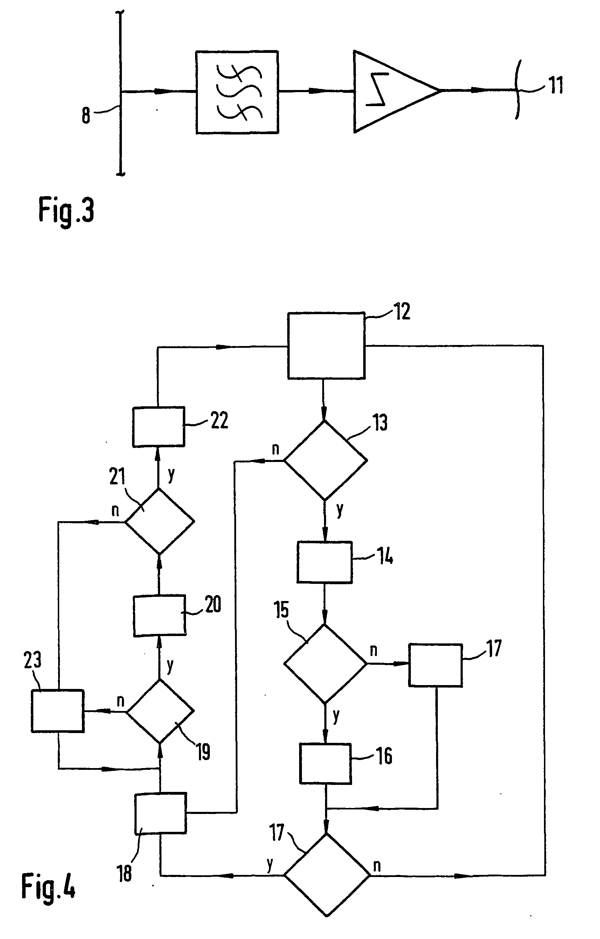

In Figur 3 ist die Auswerteschaltung als Blockdiagramm dargestellt. Die Stromversorgungsleitung 8, auf der der Frequenzimpuls übertragen wird, weist eine Verzweigung als Ausgang zu einem frequenzselektiven Filter 9 auf. Das frequenzselektive Filter 9 ist auf eine bestimmte Mittenfrequenz eingestellt, die entweder wie oben dargestellt für alle Geräte gleich ist, für jedes Gerät unterschiedlich ist oder für Gruppen von Geräten jeweils unterschiedlich ist. Das das frequenzselektive Filter 9 passierende Signal gelangt dann in einen Schwellwertdetektor 10, der die Leistung des Signals mit einem vorgegebenen Schwellwert vergleicht. Damit werden schwache und/oder rauschhafte Signale als Fehlsignale abgeblockt und nur solche Signale veranlassen eine Reaktivierung des Geräts, die eine Leistung, die über dem Schwellwert liegt, aufweisen. Das Ausgangssignal des Schwellwertentscheiders ist null, wenn die Leistung unter dem vorgegebenen Schwellwert liegt oder ein vorgegebener Spannungswert, wenn die Leistung über dem Schwellwert liegt. In diesem Fall wird das Gerät reaktiviert oder abgeschaltet, wobei der Frequenzimpuls vor allem zur Reaktivierung gedacht ist, da die Abschaltung auch leicht über Datenleitungen erfolgen kann. Bei der Reaktivierung werden zunächst die Funktionen der Bitübertragungschicht aktiviert, so dass dann ein Aufweckbefehl über die Datenleitungen auswertbar ist, um dann die volle Funktionalität des Geräts bereitzustellen. Es ist alternativ auch möglich sofort mit dem Reaktivieren die volle Funktionalität des Geräts wieder herzustellen.

In Figur 4 ist als Flussdiagramm das Verfahren dargestellt. In Verfahrensschritt 12 wird ausgewertet; dass das Gerät für eine vorgegebene Zeit keine Datenkommunikation über das Fahrzeugkommunikationsnetz vorgenommen hat. In Verfahrensschritt 13 wird dann überprüft, ob der Busmanager die Abschaltung vornehmen soll. Ist das der Fall, dann wird in Verfahrensschritt 14 der Frequenzimpuls über die Stromversorgungsleitung 8 übertragen. In Verfahrensschritt 14 wird festgestellt, ob der Frequenzimpuls selektiv ist, also für ein einzelnes Gerät gilt oder für eine Gruppe von Geräten. Ist das der Fall, dann wird in Verfahrensschritt 16 nur das bestimmte Gerät den Frequenzimpuls mittels der Schwellwertdetektor 10 auswerten, da nur das frequenzselektive Filter 9 dieses Gerätes den Frequenzimpuls zum Schwellwertdetektor 10 durchlässt, bei anderen Geräten wird der Frequenzimpuls durch das frequenzselektive Filter 9 so stark gedämpft, dass der Schwellwertdetektor 10 als Ausgangssignal eine Null abgibt.

Wurde in Verfahrensschritt 15 festgestellt, dass der Frequenzimpuls nicht selektiv ist, dann wertet jedes Gerät aus, ob der Frequenzimpuls über dem Schwellwert liegt, der durch den Schwellwertdetektor 10 vorgegeben ist. Dann wird in Verfahrensschritt 17 überprüft, ob der Frequenzimpuls über dem Schwellwert liegt, ist dass der Fall dann wird in Verfahrensschritt 18 das Gerät abgeschaltet. Die Abschaltung des Geräts erfolgt auch, wenn in Verfahrensschritt 13 festgestellt wurde, dass der Busmanager 1 selbst die Abschaltung nicht vornehmen soll, sondern dass Gerät selbst. Die Abschaltung von Geräten kann alternativ auch durch Befehle über die Datenleitungen oder durch die Geräte selbst vorgenommen werden, sofern für eine vorgegebene Zeit kein Datenverkehr von dem jeweiligen Gerät betrieben wurde.

In Verfahrensschritt 19 wird überprüft, und zwar durch den Busmanager 1, ob zu dem abgeschalteten Gerät Daten übertragen werden sollen oder von dem abgeschalteten Gerät Daten abgefragt werden sollen. Ist das der Fall, dann wird in Verfahrensschritt 20 von dem Busmanager 1 ein Frequenzimpuls zu dem Gerät übertragen, wobei in Verfahrensschritt 21 das Gerät erneut die Auswertung mittels des frequenzselektiven Filters 9 und des Schwellwertdetektors 10 vornimmt. Wurde ein Ausgangssignal von größer Null vom Schwellwertdetektor 10 abgegeben, dann wird in Verfahrensschritt 22 das Gerät wieder eingeschaltet, um dann wieder zu Verfahrensschritt 12 zurückzukehren und abzuwarten, ob das Gerät für eine vorgegebene Zeit keine Datenkommunikation liefert. Die Einschaltung kann, wie oben dargestellt, schrittweise oder sofort zu vollen Funktionalität des Geräts führen.

Wurde in Verfahrensschritt 21 festgestellt, dass das Signal unter dem Schwellwert liegt, dann wird in Verfahrensschritt 23 gewartet und zu Verfahrensschritt 19 zurückgesprungen, um auf eine Signalisierung durch einen Frequenzimpuls von dem Busmanager 1 zu warten. Es wird auch in Verfahrensschritt 19 zu Verfahrensschritt 23 zum Warten gesprungen, wenn in Verfahrensschritt 19 festgestellt wurde, dass der Busmanager 1 keinen neuen Datenverkehr mit den abgeschalteten Gerät wünscht. Wurde in Verfahrensschritt 17 festgestellt, dass der Frequenzimpuls unter dem Schwellwert liegt, dann wird das Gerät nicht abgeschaltet, und es wird zu Verfahrensschritt 12 zurückgesprungen um zu warten, ob das Gerät für eine vorgegebene Zeit keine Datenkommunikation vornimmt.

## Patentansprüche

1. Verfahren zum Betrieb von einem an ein Fahrzeugkommunikationsnetz (7, 8) angeschlossenen Gerät, wobei das Gerät abgeschaltet wird, **dadurch gekennzeichnet, dass** ein Busmanager (1) erkennt, dass eine Datenkommunikation mit dem abgeschalteten Gerät notwendig ist, und dass dann das abgeschaltete Gerät von dem Busmanager (1) mittels eine Frequenzimpulses, der über eine Stromversorgungsleitung (8) übertragen wird, reaktiviert wird.

2. Verfahren nach Anspruch 1, **dadurch gekennzeichnet, dass** der Frequenzimpuls von einer Auswerteschaltung (9, 10) des abgeschalteten Geräts mit einem Schwellwert verglichen wird und dass, wenn die Signalleistung des Frequenzimpulses über dem Schwellwert liegt, das abgeschaltete Gerät reaktiviert wird.

3. Verfahren nach Anspruch 2, **dadurch gekennzeichnet, dass** das Gerät durch einen Frequenzimpuls abgeschaltet wird, wobei der Frequenzimpuls bei einer Frequenz übertragen wird, die von wenigstens einer Auswerteschaltung (9, 10) eines Geräts des Fahrzeugkommunikationsnetzes (7, 8) erkannt wird.

4. Verfahren nach Anspruch 2, **dadurch gekennzeichnet, dass** alle dem abgeschaltetem Gerät in einem Zweig des Fahrzeugkommunikationsnetzes (7, 8) nachgeordneten Geräte ebenfalls abgeschaltet werden und dass dem reaktivierten Gerät nachgeordneten Geräte ebenfalls reaktiviert werden.

5. Verfahren nach einem der Ansprüche 3 oder 4, **dadurch gekennzeichnet, dass** das Gerät von dem Busmanager (1) abgeschaltet bzw. reaktiviert wird.

6. Verfahren nach einem der Ansprüche 3 oder 4, **dadurch gekennzeichnet, dass** sich das Gerät selbst abschaltet und vom Busmanager (1) reaktiviert wird.

7. Gerät zur Durchführung des Verfahrens nach einem der Ansprüche 1 bis 6, **dadurch gekennzeichnet, dass** das Gerät eine Auswerteschaltung (9, 10) aufweist und dass die Auswerteschaltung ein frequenzselektives Filter (9) und einen Schwellwertdetektor (10) aufweist, wobei die Auswerteschaltung (9, 10) an die Stromversorgungsleitung (8) angeschlossen ist.

8. Busmanager zur Durchführung des Verfahrens nach einem der Patentansprüche 1 bis 6, **dadurch gekennzeichnet, dass** der Busmanager derart ausgestaltet ist, dass er erkennt, dass eine Datenkommunikation mit dem abgeschalteten Gerät notwendig ist und dass er dann das abgeschaltete Gerät mittels eines Frequenzimpulses, der über eine Stromversorgungsleitung übertragen wird, reaktiviert.

## Claims

1. Method for operating a device which is connected to a vehicle communications network (7, 8), the device being switched off, **characterized in that** a bus manager (1) detects that data communication is necessary with the switched-off device, and **in that** the switched-off device is then reactivated by the bus manager (1) by means of a frequency pulse which is transmitted over a power supply line (8).

2. Method according to Claim 1, **characterized in that** the frequency pulse is compared with a threshold value by an evaluation circuit (9, 10) of the switched-off device, and **in that** the switched-off device is reactivated if the signal power of the frequency pulse is above the threshold value.

3. Method according to Claim 2, **characterized in that** the device is switched off by a frequency pulse, the frequency pulse being transmitted at a frequency which is detected by at least one evaluation circuit (9, 10) of a device of the vehicle communications network (7, 8).

4. Method according to Claim 2, **characterized in that** all the devices which are arranged downstream of the switched-off device in a branch of the vehicle communications network (7, 8) are also switched off, and **in that** devices which are arranged downstream of the reactivated device are also reactivated.

5. Method according to one of Claims 3 or 4, **characterized in that** the device is switched off or reactivated by the bus manager (1).

6. Method according to one of Claims 3 or 4, **characterized in that** the device switches itself off and is reactivated by the bus manager (1).

7. Device for carrying out the method according to one of Claims 1 to 6, **characterized in that** the device has an evaluation circuit (9, 10) and **in that** the evaluation circuit has a frequency-selective filter (9) and a threshold value detector (10), the evaluation circuit (9, 10) being connected to the power supply line (8).

8. Bus manager for carrying out the method according to one of Patent Claims 1 to 6, **characterized in that** the bus manager is configured in such a way that it detects that data communication is necessary with the switched-off device, and **in that** it then reactivates the switched-off device by means of a frequency pulse which is transmitted over a power supply line.

## Revendications

1. Procédé de gestion d'un appareil relié à un réseau de communication de véhicule (7, 8),
selon lequel on coupe l'appareil,
**caractérisé en ce qu'**
un gestionnaire de bus (1) reconnaît qu'il communique des données avec l'appareil coupé, et
l'appareil coupé est réactivé par le gestionnaire de bus (1) par l'intermédiaire d'une impulsion de fréquence transmise par une ligne d'alimentation électrique (8).

2. Procédé selon la revendication 1,
**caractérisé en ce que**
l'impulsion de fréquence est comparée à une valeur de seuil par un circuit d'exploitation (9, 10) de l'appareil coupé et
si la puissance du signal constituée par l'impulsion de fréquence dépasse le seuil, l'appareil coupé est réactivé.

3. Procédé selon la revendication 2,
**caractérisé en ce qu'**
on coupe l'appareil par une impulsion de fréquence, l'impulsion de fréquence étant transmise à une fréquence reconnue par au moins un circuit d'exploitation (9, 10) d'un appareil du réseau de communication du véhicule (7, 8).

4. Procédé selon la revendication 2,
**caractérisé en ce que**
on coupe également tous les appareils en aval de l'appareil coupé dans une branche du réseau de communication du véhicule (7, 8) et on réactive également les appareils en aval de l'appareil réactivé.

5. Procédé selon l'une des revendications 3 ou 4,
**caractérisé en ce que**
l'appareil est coupé ou réactivé par le gestionnaire de bus (1).

6. Procédé selon l'une des revendications 3 ou 4,
**caractérisé en ce que**
l'appareil se coupe de lui-même et il est réactivé par le gestionnaire de bus (1).

7. Appareil pour la mise en oeuvre du procédé selon l'une des revendications 1 à 6,
**caractérisé en ce que**
l'appareil comporte un circuit d'exploitation (9, 10) et
le circuit d'exploitation comporte un filtre (9) sélectif en fréquence et un détecteur de seuil (10),
le circuit d'exploitation (9, 10) étant relié à la ligne d'alimentation électrique (8).

8. Gestionnaire de bus pour la mise en oeuvre du procédé selon l'une des revendications 1 à 6,
**caractérisé en ce que**
ce gestionnaire est réalisé de manière à reconnaître qu'une communication de données est nécessaire avec l'appareil coupé et
il réactive ensuite l'appareil coupé à l'aide d'une impulsion de fréquence transmise par une ligne d'alimentation électrique.
